# EUROPEAN PATENT APPLICATION

(11) **EP 3 012 751 A1**
(43) Date of publication of application: **27.04.2016**
(21) Application number: 15186420.4
(22) Date of filing: 23.09.2015
(51) Int. Cl.: G06F 17/30

(54) **METHOD, APPARATUS AND COMPUTER PROGRAM PRODUCT FOR GENERATING SEMANTIC INFORMATION FROM VIDEO CONTENT**

(30) Priority: 21.10.2014 US 201414519492
(71) Applicant: Nokia Technologies Oy, 02610 Espoo (FI)
(72) Inventor: MATE, Sujeet Shyamsundar, 33720 Tampere (FI); SHETTY, Ranjeeth Ravindra, 33710 Tampere (FI)
(74) Representative: Nokia Corporation

(57) **Abstract**

A method, apparatus and computer program product are provided for generating semantic information from video content. Objects and regions of interest within video content may be identified and monitored for characteristics relating to object detection, motion content, and motion trajectory. Salient events relating to the regions may be detected based on the monitoring. Temporal segments may be identified and used to create summary video content, or highlights. An example embodiment relates to processing video footage of sports. Goals, scored points, unsuccessful scoring attempts, as well as other events may be detected in the video content. Efficiency is gained by monitoring only a relatively small portion of the frame, and by limiting the dependency on tracking moving objects.

## Description

### TECHNOLOGICAL FIELD

An example embodiment of the present invention relates generally to processing video content, and more particularly, to a method, apparatus and computer program product for generating semantic information from video content.

### BACKGROUND

In order to satisfy the demand of viewers, telecommunication service providers continually develop improvements to existing services. With the extensive array of available content comes an increase in demand for automated processing of such content.

Currently, some lengthy media content, such as broadcasts of sporting events and/or live performances require broadcasters to implement manual processes to review video content to generate highlights, recaps, summaries and/or the like. Due to high expectations of live or near-live broadcasting, some telecommunication service providers may find it difficult to meet the demand without relying on the labor intensive process of creating composite or summary videos to provide to their viewers.

### BRIEF SUMMARY

A method, apparatus, and computer program product are therefore provided for generating semantic information from video content. Certain example embodiments described herein may provide for automatic detection of salient events in video content, without requiring user review of the content. For example, a goal scored in a sporting event may be detected, therefore allowing generation of statistical information and/or identification of highlights for the purpose of creating summary or composite video files.

In an example embodiment, an apparatus is provided that includes at least one processor and at least one memory including computer program code with the at least one memory and the computer program code configured to, with the processor, cause the apparatus to perform at least receiving an indication of an object of interest in video content, identifying at least one region of interest based on the object of interest, monitoring at least one characteristic in the at least one region of interest, and in response to the monitoring, generating semantic information relating to the video content.

In some embodiments, the at least one memory and the computer program code are further configured to, with the processor, cause the apparatus to perform at least determining that a salient event relating to the object of interest has occurred, identifying temporal segments relating to the salient event, and generating summary video content comprising the identified temporal segments.

In some embodiments, the at least one memory and the computer program code are further configured to, with the processor, cause the apparatus to perform at least generating metadata describing the salient event, storing the metadata in association with the video content, and providing the metadata and video content such that the summary video content is recreated for playback based on the metadata and video content.

In some examples, the at least one characteristic comprises motion detection, object recognition, object tracking, color variation and/or object detection. The at least one memory and the computer program code may be further configured to, with the processor, cause the apparatus to perform at least receiving an indication of a user input identifying the object of interest. In some embodiments, the at least one memory and the computer program code are further configured to, with the processor, cause the apparatus to perform at least in an instance the perspective of the video content changes, tracking the object of interest and the at least one regions of interest. In some embodiments, the at least the object of interest or region of interest is identified based on a context of the video content.

In another example embodiment, a computer program product is provided that includes at least one non-transitory computer-readable storage medium having computer-executable program code instructions stored therein with the computer-executable program code instructions including program code instructions for receiving an indication of an object of interest in video content, identifying at least one region of interest based on the object of interest, monitoring at least one characteristic in the at least one region of interest, and in response to the monitoring, generating semantic information relating to the video content.

In some embodiments, the computer-executable program code instructions further include program code instructions for determining that a salient event relating to the object of interest has occurred, identifying temporal segments relating to the salient event, and generating summary video content comprising the identified temporal segments.

In some examples, the computer-executable program code instructions further include program code instructions for generating metadata describing the salient event, storing the metadata in association with the video content, and providing the metadata and video content such that the summary video content is recreated for playback based on the metadata and video content.

The at least one characteristic may include motion detection, object recognition, object tracking, color variation and/or object detection. In some embodiments, the computer-executable program code instructions further include program code instructions for receiving an indication of a user input identifying the object of interest. The computer-executable program code instructions of an example embodiment further include program code instructions for, in an instance the perspective of the video content changes, tracking the object of interest and the at least one regions of interest. In some examples, at least the object of interest or region of interest is identified based on a context of the video content. A method is provided in a further example embodiment with the method including receiving an indication of an object of interest in video content, identifying at least one region of interest based on the object of interest, monitoring at least one characteristic in the at least one region of interest, and in response to the monitoring, generating semantic information relating to the video content.

In some example embodiments, the method further includes determining that a salient event relating to the object of interest has occurred, identifying temporal segments relating to the salient event, and generating summary video content comprising the identified temporal segments. The method of an example embodiment may further include generating metadata describing the salient event, storing the metadata in association with the video content, and providing the metadata and video content such that the summary video content is recreated for playback based on the metadata and video content.

The method may further include receiving an indication of a user input identifying the object of interest. In some examples, the method includes, in an instance in which the perspective of the video content changes, tracking the object of interest and the at least one regions of interest. The object of interest or region of interest may be identified based on a context of the video content.

In yet another example embodiment, an apparatus is provided with means for receiving an indication of an object of interest in video content, means for identifying at least one region of interest based on the object of interest, means for monitoring at least one characteristic in the at least one region of interest, and means for in response to the monitoring, generating semantic information relating to the video content.

### BRIEF DESCRIPTION OF THE DRAWINGS

Having thus described certain example embodiments of the present invention in general terms, reference will hereinafter be made to the accompanying drawings which are not necessarily drawn to scale, and wherein:
Figure 1 is a block diagram for generating semantic information from a video file according to an example embodiment;
Figure 2 is a schematic diagram of an apparatus for generating semantic information from video content according to an example embodiment;
Figure 3 is a flowchart of operations for generating semantic information from video content according to an example embodiment; and
Figures 4 and 5 are example frames used in the generation of semantic information from video content according to an example embodiment.

### DETAILED DESCRIPTION

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

As defined herein, a "computer-readable storage medium," which refers to a physical storage medium (e.g., volatile or non-volatile memory device), may be differentiated from a "computer-readable transmission medium," which refers to an electromagnetic signal.

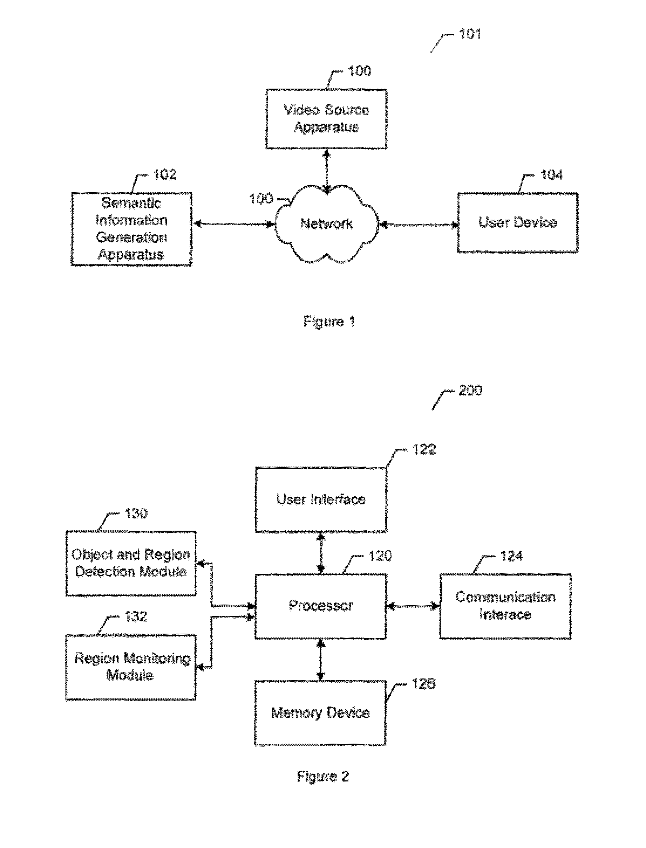

Figure 1 is a block diagram of a system 101 for generating semantic information from a video file or video content according to an example embodiment. In an example embodiment, a video source apparatus 100 may be configured to provide video content to the semantic information generation apparatus 102. As described herein, the semantic information generation apparatus 102 may process the video content to generate semantic information, detect salient events and/or generate summary video content. Such information may be provided to a user device 104. The semantic information generation apparatus 102 may be implemented on a personal computer, server or distributed system, for example and may comprise processing circuitry configured to perform the operations described herein. A more detailed example of a semantic information generation apparatus 102 is described with respect to apparatus 200 and Figure 2 below.

In general, the video source apparatus 100 may be any electronic device, system or server capable of transmitting video content to the semantic information generation apparatus 102. In some examples, the video source apparatus 100 may capture video content via a camera or other video capture device, and transmit the content to the semantic information generation apparatus 102. In this regard, video source apparatus 100 may be embodied by a wide variety of devices including mobile terminals, such as personal digital assistants (PDAs), mobile telephones, laptop computers, tablet computers, cameras, camera phones, video recorders, or any combination of the aforementioned, and other types of video recording systems. The video source apparatus 100 may alternatively be embodied by a fixed video source, such as a server, a stationary camera or the like.

Additionally or alternatively, the video source apparatus 100 may receive video content from yet another device (not shown), e.g., from another video capture device or a memory or server that provides the video content, and route the video content to the semantic information generation apparatus 102 for processing. As such, the video source apparatus 100 may be a server, a router or other computing device or network entity.

In general, the user device 104 may be configured to receive semantic information from the semantic information generation apparatus 102 and provide the semantic information to a user. The user device 104 may be embodied by a wide variety of devices including mobile terminals, such as personal digital assistants (PDAs), pagers, mobile televisions, mobile telephones, gaming devices, laptop computers, tablet computers, cameras, camera phones, video recorders, audio/video players, radios, global positioning system (GPS) devices, navigation devices, or any combination of the aforementioned. Alternatively, the user device 104 may be a fixed computing device, such as a personal computer, a workstation or the like.

In some examples, the video source apparatus 100 may be implemented on the user device 104, and the user device 104 may capture video content, transmit it to the semantic information generation apparatus 102, and receive the corresponding generated semantic information for provision to a user.

Communication between the components of system 101 may occur via network 100. Network 100 may be embodied in a personal area network, local area network, the Internet, any other form of a network, or in any combination thereof, including proprietary private and semi-private networks and public networks, such as the Internet. The network 100 may comprise a wire line network, wireless network (e.g., a cellular network, wireless local area network (WLAN), wireless personal area network (WPAN), wireless wide area network, etc.).

As another example, a semantic information generation apparatus 102 may communicate with video source apparatus 100 and/or user device 104 via a direct connection. In some examples, the video source apparatus 100, semantic information generation apparatus 102 and user device 104 are implemented on one device and network 100 is optional.

Figure 2 is a schematic diagram of an apparatus 200 which may implement any of the video source apparatus 100, semantic information generation apparatus 102, and/or the user device 104. Apparatus 200 may include a processor 120, memory device 126, user interface 122, communication interface 124, and in instances apparatus 200 is implemented as a semantic information generation apparatus 102, object and region detection module 130, and/or object and region monitoring module 132.

In an example embodiment, the processor 120 (and/or co-processors or any other processing circuitry assisting or otherwise associated with the processor 120) may be in communication with the memory device 126 via a bus for passing information among components of the apparatus 200. The memory device 126 may include, for example, one or more volatile and/or non-volatile memories. In other words, for example, the memory device 126 may be an electronic storage device (e.g., a computer readable storage medium) comprising gates configured to store data (e.g., bits) that may be retrievable by a machine (e.g., a computing device like the processor 120). The memory device 126 may be configured to store information, data, content, applications, instructions, or the like for enabling the apparatus to carry out various functions in accordance with an example embodiment of the present invention. For example, the memory device 126 could be configured to buffer input data for processing by the processor 120. Additionally or alternatively, the memory device 126 could be configured to store instructions for execution by the processor 120.

The apparatus 200 may, in an example embodiment, be embodied in various devices as described above. However, in an example embodiment, the apparatus 200 may be embodied as a chip or chip set. In other words, the apparatus 200 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus 200 may therefore, in some cases, be configured to implement an example embodiment of the present invention on a single chip or as a single "system on a chip." As such, in some cases, a chip or chipset may constitute means for performing one or more operations for providing the functionalities described herein.

The processor 120 may be embodied in a number of different ways. For example, the processor 120 may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in an example embodiment, the processor 120 may include one or more processing cores configured to perform independently. A multi-core processor may enable multiprocessing within a single physical package. Additionally or alternatively, the processor 120 may include one or more processors configured in tandem via the bus to enable independent execution of instructions, pipelining and/or multithreading.

In an example embodiment, the processor 120 may be configured to execute instructions stored in the memory device 126 or otherwise accessible to the processor 120. Alternatively or additionally, the processor 120 may be configured to execute hard coded functionality. As such, whether configured by hardware or software methods, or by a combination thereof, the processor 120 may represent an entity (e.g., physically embodied in circuitry) capable of performing operations according to an example embodiment of the present invention while configured accordingly. Thus, for example, when the processor 120 is embodied as an ASIC, FPGA or the like, the processor 120 may be specifically configured hardware for conducting the operations described herein. Alternatively, as another example, when the processor 120 is embodied as an executor of software instructions, the instructions may specifically configure the processor 120 to perform the algorithms and/or operations described herein when the instructions are executed. However, in some cases, the processor 120 may be a processor of a specific device (e.g., a mobile terminal or network entity) configured to employ an example embodiment of the present invention by further configuration of the processor 120 by instructions for performing the algorithms and/or operations described herein. The processor 120 may include, among other things, a clock, an arithmetic logic unit (ALU) and logic gates configured to support operation of the processor 120.

In some examples, such as when apparatus 200 is implemented as a semantic information generation apparatus 102, the processor 120 may include, or otherwise be in communication with object and region detection module 130 and/or region monitoring module 132. In some examples, the modules 130 and 132 may be implemented remotely from the semantic information generation apparatus 102 and/or remotely from each other. Object and region detection module 130 may comprise processing circuitry configured for identifying objects of interest and regions of interest within video content, as described in further detail herein. Region monitoring module 132, may comprise processing circuitry configured for monitoring regions of interests for changes in characteristics such that semantic information may be inferred. Monitoring of the regions of interest is described in further detail hereinafter.

Meanwhile, the communication interface 124 may be any means such as a device or circuitry embodied in either hardware or a combination of hardware and software that is configured to receive and/or transmit data from/to a network and/or any other device or module such as between the video source apparatus 100, semantic information generation apparatus 102 and/or the user device 104. In this regard, the communication interface 124 may include, for example, an antenna (or multiple antennas) and supporting hardware and/or software for enabling communications with a wireless communication network. Additionally or alternatively, the communication interface 124 may include the circuitry for interacting with the antenna(s) to cause transmission of signals via the antenna(s) or to handle receipt of signals received via the antenna(s). In some environments, the communication interface 124 may alternatively or also support wired communication. As such, for example, the communication interface 124 may include a communication modem and/or other hardware/software for supporting communication via cable, digital subscriber line (DSL), universal serial bus (USB) or other mechanisms.

In an example embodiment, the apparatus 200 may include a user interface 122 that may, in turn, be in communication with the processor 120 to receive an indication of, or relating to, a user input and/or to cause provision of output to the user, including semantic information or composite summary video content. As such, the user interface 122 may include, for example, a keyboard, a mouse, a joystick, a display, a touch screen(s), touch areas, soft keys, a microphone, a speaker, or other input/output mechanisms.

Alternatively or additionally, the processor 120 may comprise user interface circuitry configured to control at least some functions of one or more user interface elements such as, for example, a camera, speaker, ringer, microphone, display, and/or the like. The processor 120 and/or user interface circuitry comprising the processor 120 may be configured to control one or more functions of one or more user interface elements through computer program instructions (e.g., software and/or firmware) stored on a memory accessible to the processor 120 (e.g., memory device 126, and/or the like).

According to an example embodiment, communication interface 124 may be configured to communicate with a communication interface of another apparatus of system 101, either directly or over a network 100. Semantic information generation apparatus 102 may, for example, be embodied as a server, remote computing device, and/or the like. In this regard, semantic information generation apparatus 102 may comprise a direct connection, or connection via network 100, to video source apparatus 100 and/or user device 104.

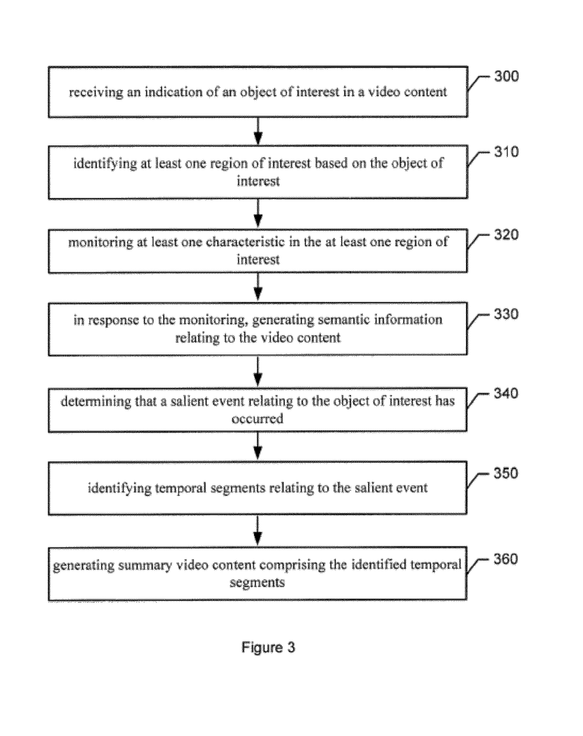

Figure 3 is a flowchart of operations for providing control of a user device according to an example embodiment. As shown by operation 300, the semantic information generation apparatus 102, may include means, such as object and region detection module 130, processor 120, user interface 122, communications interface 124, and/or the like, for receiving an indication of an object of interest in video content. The video content may be received from video source apparatus 100 as described above.

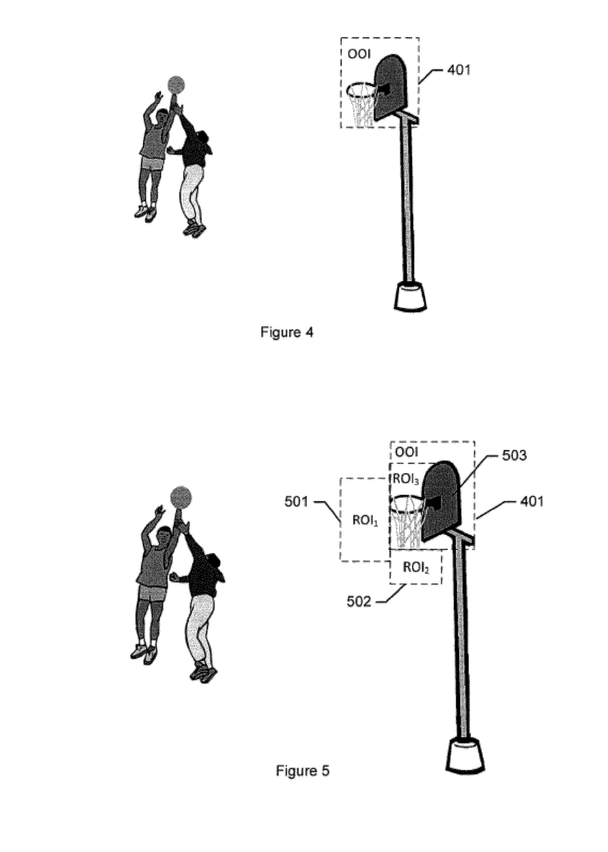

In some examples, the video content may be provided to a user with user device 104, and the user may indicate via user interface 122, the object of interest. For example, Figure 4 illustrates an example frame of video content. In Figure 4, an object of interest 401 is indicated by the dashed line. A user may select the backboard region of the video content as the object of interest as a mechanism for directing the semantic information generation apparatus 102 to monitor baskets or missed shots in a basketball game. The user input may include pointing to and/or tracing the object of interest, for example. Reference coordinates of the object of interest may be stored for subsequent use.

As another example, the semantic information generation apparatus 102 may store historical information in association with a video content type or context of the video content, such as on memory device 126 that may be used for the purposes of automatically detecting an object of interest. For example, in an instance video content is known to be footage of a basketball game, the semantic information generation apparatus 102 may retrieve information to enable the processor 120 to identify the object of interest in the video content, such as by edge detection, position information relative to the view, and/or the like. In some instances, the semantic information generation apparatus 102 may reuse the historical information previously detected, such as a previously identified region of interest, and apply the information to a current video for monitoring based on a same or similar content type and/or video context. For example, detection of a basketball goal detected in a previous context may be applied to a present video content in a same or similar basketball arena. In this regard the semantic information generation apparatus 102 may learn identifying characteristic of object of interests to improve identification in subsequent analysis.

In some examples, particularly applicable to sporting events, the semantic information generation apparatus 102 may access information relating to the location of the event, and the specific camera position used to capture the footage. In this regard, various footage captured from different viewing angles may be processed accordingly, as the object of interest 401 may be in the same position relative to the viewing area, for a particular known camera position. In this regard, the object of interest 401 may be identified with position coordinates within the viewing area.

Continuing to operation 310, the semantic information generation apparatus 102 may include means, such as object and region detection module 130, processor 120 and/or memory device 126, for identifying at least one region of interest based on the object of interest. The processor 120 may identify regions of interest based on the object of interest and/or on the context of the video content. For example, in Figure 5, regions of interest 501, 502 and 503 are identified based on their relative positions to the object of interest 401. Region of interest 501 lies in front of the object of interest 401, such that the area in front of the basketball net is monitored as shots approach the hoop. Region of interest 502 lies below the net so that missed shots, successful shots, rebounds and/or the like, may be monitored. Region of interest 503 covers a portion of the object of interest 401, but not the entire object of interest 401.

The regions of interest may be identified based on positioning information relative to the object of interest, such as based on the context of the video content. For example, for all basketball game footage, similar regions of interest may be identified in spaces in front of, below, and including the net. The semantic information generation apparatus 102 may therefore be configured to detect the viewing angle of the video content, and adjust the regions of interest based on the identified position of the object of interest.

In some examples, in an instance the perspective of the video content changes, the semantic information generate apparatus 102 may track the object of interest and/or the at least one region of interest. In examples in which a camera moves to capture the video content (and/or the source camera changes), the semantic information generation apparatus 102 may repeatedly calculate and identify the object of interest and regions of interests as their relative locations within the video frame change. This may include tracking the objects of interest and regions of interest frame by frame. In some examples, the viewing angle of video content may change abruptly, such as in an instance an event is captured with multiple cameras. In such an instance the semantic information generation apparatus 102 may reprocess the video content in its entirety to identify the object of interest and corresponding regions of interest. Therefore, some operations of Figure 3 may be continually repeated.

Alternatively, a camera recording the video content may be static, and the offset or coordinates of the object of interest and/or regions of interest may remain constant.

In some examples, coordinates defining objects of interest and/or regions of interest may be stored, and/or signaled to other modules and/or components of a system for continuing the processing of the video content, as follows. Alternatively, the processing may be performed by the semantic information generation apparatus 102.

Continuing to operation 320, the semantic information generation apparatus 102 may include means, such as region monitoring module 132, processor 120 and/or memory device 126, for monitoring at least one characteristic in the at least one region of interest. For example, the monitoring may include processing the region of interest for object detection. A basketball may have distinguishable features such that the semantic information generation apparatus 102 detects when the basketball enters any of the regions of interest. Various video processing techniques may be used to identify an object within the region of interest, such as edge detection, feature detection, color variation, and/or the like.

Additionally or alternatively, the characteristics monitored by the semantic information generation apparatus 102 may include various processes for motion detection such as motion contour, motion trajectory, and/or the like. In addition to motion detection, object detection, object tracking, object recognition, and/or color variation may also be used. The semantic information generation apparatus 102 may therefore be configured to detect when there is a significant movement or motion within a region of interest with a significant movement or motion being defined in one example embodiment to be movement or motion within the region of interest that exceeds a predefined threshold.

In some example embodiments, the monitoring may further include monitoring specific characteristics, such as those mentioned above relating to object detection, object tracking, object recognition, color variation, and/or motion detection, relative to a set of parameters or thresholds stored in memory device 126. The parameters and/or thresholds may be configured for the context of the video content. For example, when an edge is detected having a specified or threshold curvature, the associated object may therefore be detected as a basketball.

Referring again to Figure 5 as an example, the regions of interest 501, 502 and/or 503 may be monitored using any of the monitoring methods relating to object detection, object tracking, object recognition, color variation, and/or motion detection.

Continuing to operation 330, the semantic information generation apparatus 102 may include means, such as processor 120 and/or memory device 126, for in response to the monitoring, generating semantic information relating to the video content. For example, the semantic information generation apparatus 102 may particularly detect when points are scored in an instance the ball is detected in a specific region of interest, such as region of interest 502 of Figure 5 below the net. In some instances, the semantic information generation apparatus 102 may be configured to monitor multiple characteristics of the regions of interest, such as in an instance in which motion of an object is detected and, more particularly, in an instance in which the object in motion is identified as a ball and the motion is identified to be in a direction commensurate with the ball exiting the net. In such an example, the semantic information generation apparatus 102 may determine that the characteristics are consistent with a goal, and may provide semantic information such as that indicating points have been scored. In some examples, unsuccessful score attempts may also be detected. As yet another example, players' hands and/or ball detected in region 502 may be detected as a rebound. In some examples, a template, such as one specific to the context of the video content, may be used for the generation of the semantic information.

In some examples, as shown by operation 340, the semantic information generation apparatus 102 may include means, such as processor 120, for determining that a salient event relating to the object of interest has occurred. In this regard, the definition of a salient event may be predefined such that the semantic information generation apparatus 102 may determine that a salient event has occurred in an instance in which the definition has been satisfied. For example, an instance where the ball is detected to have entered any of the regions of interest 501, 502, and/or 503 may be considered a trigger for the semantic information generation apparatus 102 to indicate that a salient event has occurred at the specific point in time in the video content that the ball entered a respective region of interest. The semantic information generation apparatus 102 may therefore be configured to identify, generate and/or store salient event coordinates, and/or a salient event type, such as a successful score, unsuccessful score, rebound and/or the like. Thus, the semantic information generation apparatus 102 may also be configured to identify the type of a salient event, such as again based upon a predetermined definition of one or more different types of salient events.

As such, as shown by operation 350, the semantic information generation apparatus 102 may include means, such as processor 120, for identifying temporal segments relating to the salient event, such as portions of video content leading up to the salient event and/or immediately following the salient event. A suitable buffer may be identified or stored, and the semantic information generation apparatus 102 may determine the temporal segment based on the buffer. The buffer may be predefined in an example embodiment to include a predetermined number of frames in advance of and/or following the frame(s) that include the salient event that has been identified such that the temporal segments that are identified may include the video frames included within the buffer.

At operation 360, the semantic information generation apparatus 102 may include means, such as processor 120, for generating summary video content comprising the identified temporal segments. In some examples, any of the operations of Figure 3 may be repeated. Series of temporal segments related to salient events may be identified, such as the baskets that were scored by one or both teams, and combined such that summary video content is generated. For example, the semantic information generation apparatus 102 may generate a shorter highlights video of a long sporting event. Using the methods provided herein, the information generation apparatus 102 may generate the summary content with little or no input required from a user.

In some examples, the semantic information generation apparatus 102 may generate metadata describing the salient event. The metadata may include, for example, timestamps indicating start and end times of salient events in the video content. The metadata may be stored with the video content, such as on memory device 126. In response to subsequent requests for highlights of the video content for example, the semantic information generation apparatus 102 may provide the metadata and video content such that the summary video content is recreated for playback based on the metadata and video content.

The semantic information generation apparatus 102 and the associated method described herein provide efficient content analysis to video processing due to only a small portion of the content needing to be analyzed. For example, in the example basketball scenario referred to herein, only 0.5% of the total video resolution may need to be analyzed to generate semantic information and/or generate summary video content.

Furthermore, the semantic information generation apparatus 102 is not necessarily dependent on the creation and training of detectors for other objects of interest (such as the basketball). Similarly for ice-hockey a goal-mouth may be detected, but detecting and tracking of the fast moving puck is not needed. Therefore, the system may be easily extended to different sports and/or contexts with less effort and less training. The effort in extending and/or developing the semantic information generation apparatus 102 for coverage to new sports or events may be more efficient than those methods relying on the tracking of moving objects throughout the full resolution and/or compared to other known video processing techniques. Since the semantic information generation apparatus 102 utilizes low level features, there is no need to detect the actual moving object. Detecting static objects of interest (e.g., the basketball board or net) results in more efficient event detection that attempting to continuously track the fast moving objects.

Embodiments provided herein may therefore provide for more efficient processing by broadcasters and/or other content providers that maintain large volumes of video content. Such stakeholders may benefit from semantic information generation and summary video generation without the need for users to individually review content and manually select the pertinent events or video highlights.

As described above, Figure 3 illustrates a flowchart of an example method, and computer program product according to an example embodiment of the invention. It will be understood that each block of the flowchart, and combinations of blocks in the flowcharts, may be implemented by various means, such as hardware, firmware, processor, circuitry, and/or other devices associated with execution of software including one or more computer program instructions. For example, one or more of the procedures described above may be embodied by computer program instructions. In this regard, the computer program instructions which embody the procedures described above may be stored by a memory device 126 of an apparatus 200 employing an example embodiment of the present invention and executed by a processor 120 of the apparatus 200. As will be appreciated, any such computer program instructions may be loaded onto a computer or other programmable apparatus (e.g., hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowchart, and combinations of blocks in the flowchart, may be implemented by special purpose hardware-based computer systems which perform the specified functions, or combinations of special purpose hardware and computer instructions.

In an example embodiment, certain ones of the operations above may be modified or further amplified. Furthermore, in an example embodiment, additional optional operations may be included. Modifications, additions, or amplifications to the operations above may be performed in any order and in any combination.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An apparatus comprising means for:
receiving an indication of an object of interest in video content;
identifying at least one region of interest based on the object of interest;
monitoring at least one characteristic in the at least one region of interest; and
in response to the monitoring, generating semantic information relating to the video content.

2. The apparatus according to claim 1, further comprising means for:
determining that a salient event relating to the object of interest has occurred;
identifying temporal segments relating to the salient event; and
generating summary video content comprising the identified temporal segments.

3. The apparatus according to claim 2, further comprising means for:
generating metadata describing the salient event;
storing the metadata in association with the video content; and
providing the metadata and video content such that the summary video content is recreated for playback based on the metadata and video content.

4. The apparatus according to claim 1, wherein the at least one characteristic comprises at least one of motion detection or object tracking.

5. The apparatus according to claim 1, wherein the at least one characteristic comprises at least one of object detection, object recognition or color variation.

6. The apparatus according to claim 1, further comprising means for:
receiving an indication of a user input identifying the object of interest.

7. The apparatus according to claim 1, further comprising means for:
in an instance the perspective of the video content changes, tracking the object of interest and the at least one region of interest.

8. The apparatus according to claim1, wherein at least the object of interest or region of interest is identified based on a context of the video content.

9. A computer program product comprising at least one non-transitory computer-readable storage medium having computer-executable program code instructions stored therein, the computer-executable program code instructions comprising program code instructions for:
receiving an indication of an object of interest in video content;
identifying at least one region of interest based on the object of interest;
monitoring at least one characteristic in the at least one region of interest; and
in response to the monitoring, generating semantic information relating to the video content.

10. The computer program product according to claim 9, wherein the computer-executable program code instructions further comprise program code instructions for:
determining that a salient event relating to the object of interest has occurred;
identifying temporal segments relating to the salient event; and
generating summary video content comprising the identified temporal segments.

11. The computer program product according to claim 10, wherein the computer-executable program code instructions further comprise program code instructions for:
generating metadata describing the salient event;
storing the metadata in association with the video content; and
providing the metadata and video content such that the summary video content is recreated for playback based on the metadata and video content.

12. The computer program product according to claim 9, wherein the at least one characteristic comprises at least one of motion detection or object tracking.

13. A method comprising:
receiving an indication of an object of interest in video content;
identifying at least one region of interest based on the object of interest;
monitoring at least one characteristic in the at least one region of interest; and
in response to the monitoring, generating semantic information relating to the video content.

14. The method according to claim 13, further comprising:
determining that a salient event relating to the object of interest has occurred;
identifying temporal segments relating to the salient event; and
generating summary video content comprising the identified temporal segments.

15. The method according to claim 14, further comprising:
generating metadata describing the salient event;
storing the metadata in association with the video content; and
providing the metadata and video content such that the summary video content is recreated for playback based on the metadata and video content.
